Europäisches Patentamt

European Patent Office

Office européen des brevets

(19)

(11) Publication number: **0 087 008**
**B1**

(12) **EUROPEAN PATENT SPECIFICATION**

(45) Date of publication of patent specification: **13.05.87**

(51) Int. Cl.⁴: **G 06 F 9/26**

(21) Application number: **83100913.9**

(22) Date of filing: **01.02.83**

(54) Operation code decoding device with a plurality of programmable logic arrays.

(30) Priority: **22.02.82 US 350661**

(43) Date of publication of application:
**31.08.83 Bulletin 83/35**

(45) Publication of the grant of the patent:
**13.05.87 Bulletin 87/20**

(84) Designated Contracting States:
**DE FR GB**

(56) References cited:
**FR-A-2 312 837**
**US-A-3 422 404**
**US-A-3 728 686**
**US-A-4 354 228**

**IEEE JOURNAL OF SOLID-STATE CIRCUITS,
vol. SC-14, no. 5, October 1979, pages 833-840,
New York, USA , P.W. COOK: "A study in the
use of PLA-based macros"**

(73) Proprietor: **International Business Machines
Corporation
Old Orchard Road
Armonk, N.Y. 10504 (US)**

(72) Inventor: **Thoma, Nandor G.
4686 NW 2nd Ct.
Boca Raton Florida 33431 (US)**
Inventor: **Moore, Victor Stewart
RR No. 1, Box 603
Pompano Beach Florida 33064 (US)**
Inventor: **Kraft, Wayne Richard
10720 NW 43 Ct.
Coral Springs Florida 33065 (US)**

(74) Representative: **Siccardi, Louis
Compagnie IBM France Département de
Propriété Intellectuelle
F-06610 La Gaude (FR)**

## Description

The invention relates to improvements to programmable logic arrays (PLA) and particularly to an operation code decoding device having a plurality of multiplexed programmable logic arrays.

Computer memories with improved word accessing are known in the prior art. For example, US—A—3,728,686 discloses a system in which a memory word includes at least two elementary operation words, and accessing of a next memory word occurs concurrently with a determination of which elementary operation word, present in the next memory word, will be utilized. The computer memory of US—A—3,728,686 utilizes a first decoder and an elementary operation memory including memory word storage locations, to concurrently fetch two or more address-related microwords. A second decoder is used to select which of the two or more microwords apply to an instruction. Such concurrent fetching of microwords statistically improves the performance of this memory because of the likelihood of branch instruction targets residing within the fetched microwords. The fetched microwords must be sequentially address-related, meaning adjacent fetched microwords have address differing only by one.

In contrast to the device of US—A—3,728,686, the device according to the present invention seeks to improve memory performance by dividing instruction or OP code decoding among a plurality of PLA's each of which yields one microword. These microwords need not be sequentially address-related. Only one of these microwords (as will appear in detail hereinafter) applies at all to the instruction being decoded. The other microwords fetched are discarded, whereas the memory of US—A—3,728,686 must retain all fetched microwords to be operable. The end result achieved in the present invention is different from that of US—A—3,728,686 whose technique provides a plurality of sequentially address-related microwords to achieve improved performance, whereas the present invention uses a plurality of small concurrently executing PLA's to quickly fetch just one microword.

Patent US—A—4,353,228, provides for the decoding of computer operation codes (OP codes), or computer instructions, using a programmable logic array (PLA). A PLA typically includes an AND array and an OR array. Decoding of an OP code is done by applying the OP code to the AND array of the PLA, and extracting the proper control information from the OR array of the PLA. For all but the simplest computing machines, the PLA becomes physically large. This results in a performance degradation manifest in slower machine speeds. For example, jump instructions execute slowly when the jump OP code is decoded using such prior art PLA's because if the jump is made, processing must wait for another OP code to propagate through the PLA.

In order to improve the speed at which an instruction can be decoded, the present invention provides for a division of labor among several PLA's arranged in a structure wherein each can perform instruction decoding concurrently, even though only one PLA will actually yield the correct microword. Such a division of labor among several PLA's achieves an overall physical size reduction when compared to implementing the same function in one PLA as in US—A—4,354,228. The reduction in size of each PLA increases their performance. Overall, this reduces the time needed to decode instructions.

The invention as claimed in Claim 1 is intended to solve the above-mentioned problem.

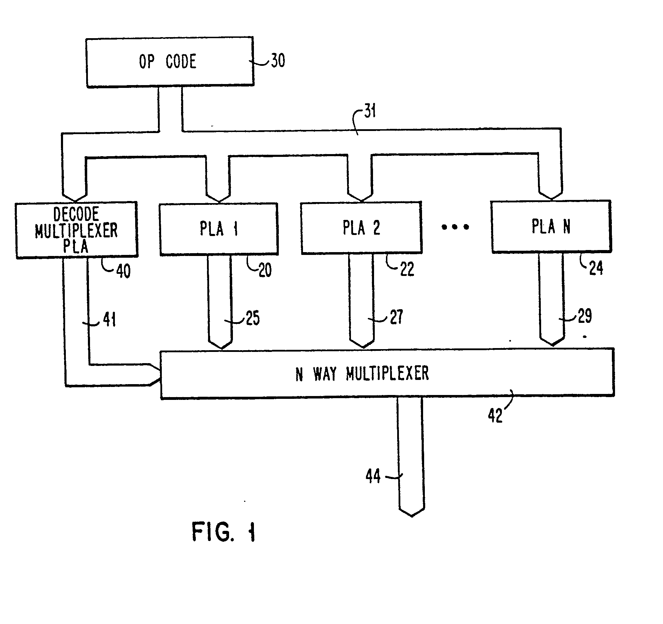

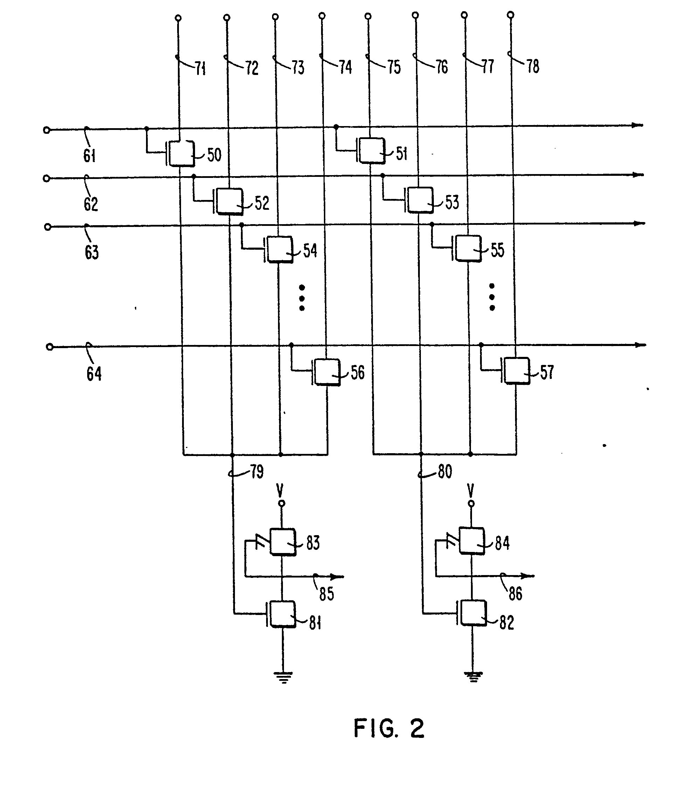

The details of the invention will be described in connection with the accompanying drawings, in which Figure 1 is a schematic drawing illustrating the device of the invention; and in which Figure 2 is a schematic drawing illustrating a portion of N way multiplexer 42 of Figure 1.

Referring to Figure 1, a decoding device constructed in accordance with the invention includes a plurality of programmable logic arrays (PLA's) 20, 22, 24. Operation code storage means 30 provides on lines 31 to each of PLA's 20, 22, 24 (three are shown for illustrative purposes only) the operation code (OP code) selected for decoding. At least a portion of OP code 30 is fed to decode multiplexer 40, which may optionally be implemented as another PLA. Decoder multiplexer 40 decodes that portion of OP code 30 fed to it to select that one of PLA's 20—24 which is to provide the decoder OP code. This is done by using select bus output 41 of decode multiplexer 40 to gate through multiplexer 42 to control code bus 44 the decoded OP code output from the selected one of PLA's 20—24. Multiplexer 42 further serves to electrically isolate each of PLA's 20—24 from the others.

Decode multiplexer 40 preferably decodes that portion of OP code 30 which identifies the instruction class, and each of PLA's 20—24 is optimized for decoding a given instruction class. Examples of instruction classes include, inter alia, memory-to-memory and memory-to-register instructions. PLA's 20—24 all operate in parallel to decode OP code 30 and provide respective control code 1 on lines 25, control code 2 on lines 27, and control code N on lines 29; however, only that PLA's 20—24 which will decode a select OP code 30 to the correct control code is gated to control code bus 44 through multiplexer 42.

Referring now to Figure 2, one exemplary implementation of N way multiplexer 42 is described. This implementation, illustrate an array of transfer field effect transistors (FET's) 50—57 sufficient to multiplex two product term bits from each of four PLA's to gate two control bits to bus 44. Of course, the array can be extended to handle more bits from more PLA's.

Select bus 41 from decode multiplexer 40 herein provides select lines 61—64. Lines 71—74 provide product term bit 0, respectively from PLA 20, PLA 22, PLA (not shown), and PLA 24. Lines 75—78 provide product term bit 1, respectively from PLA 20, PLA 22, PLA (not shown) and PLA 24.

Select line 61 is connected to the gates of FET's 50 and 51, corresponding to bits 0 to 1 from PLA 20. Similarly, select line 62 is connected to the gates of FET's 52, 53; select line 63 to the gates of FET's 54 and 55; and select line 64 to the gates of FET's 56 and 57. The source terminals of each of FET's 50, 52, 54, 56 are connected by line 79 to the gate of FET 81; and those of FET's 51, 53, 55, 57 to the gate of FET 82. When a FET 50—57 is selected by a signal on a connected select line 61—64, the FET source is shorted to the drain (lines 71—78 are connected to the drain terminals of FET's 50—57 as shown), and the signal (positive or negative) on the gated lines 71—78 applied to the connected one of lines 79, 80. FET 83 provides a load device, which in connection with FET 81, is used to amplify and invert the signal on line 79 for loading to control code bus 44 bit 0 line 85. Similarly, FET's 82, 84 amplify and invert the signal on line 80 for loading to control code bus 44 bit 1 line 86.

## Claims

1. An operation code decoding device including means (30) for providing operation code signals (31), a control code bus (44), and a programmable logic array means responsive to said operation code signals for generating control code signals therefrom, the decoding device being characterized in that said programmable logic array means comprises:

a plurality of programmable logic arrays (20—24) each responsive to said operation code signals and concurrently operable for generating respective decoded output signals (25—29); and

a decode multiplexer (40) further responsive to said operation code signals for selecting one of said plurality of programmable logic arrays and for gating the decoded output signals therefrom to said control code bus as control code signals.

2. The device according to claim 1 wherein each programmable logic array (20—24) is adapted to decode operation codes of a predetermined class, and said decode multiplexer (40) includes decode means for determining the class of a selected operation code and in response thereto for generating a select signal for selecting the corresponding programmable logic array.

3. The device according to claim 1 wherein said decode multiplexer (40) comprises a programmable logic array.

4. The device according to any one of the preceding Claims further comprising a N-way multiplexer (42) for receiving decoded output signals (25—29) from said programmable logic arrays (20—24), and providing control code signals on said control code bus (44).

5. The device according to Claim 4 in which said N-way multiplexer (42) is composed of field effect transistors the gates of which are controlled by gating signals (41) provided by said decode multiplexer (40).

## Patentansprüche

1. Eine Betriebscode-Dekodiervorrichtung mit Mitteln (30), um Betriebscodesignale (31), einen Steuercodebus (44) und ein programmierbares Logikbereichsmittel zu erstellen, das auf die genannten Betriebscodesignale anspricht und daraus Steuercodesignale erzeugt, wobei die genannte Dekodiervorrichtung dadurch gekennzeichnet ist, dass das genannte Logikbereichsmittel folgendes aufweist:

eine Vielzahl von programmierbaren Logikbereichen (20—24), die jeweils auf die genannten Betriebscodesignale ansprechen und gleichzeitig entsprechende dekodierte Ausgangssignale (25—29) erzeugen können; und

einen Dekodier-Multiplexer (40), der dann auf die genannten Betriebscodesignale anspricht, um einen Logikbereich aus der genannten Vielzahl dieser Bereiche auszuwählen und die dekodierten Ausgangssignale davon als Steuercodesignale dem genannten Steuercodebus zuzuleiten.

2. Vorrichtung nach Anspruch 1, in der jeder programmierbare Logikbereich (20—24) dafür ausgelegt ist, Betriebscodes einer bestimmten Klasse zu dekodieren, und der genannte Dekodier-Multiplexer (40) Dekodiermittel aufweist, mit deren Hilfe die Klasse eines gewählten Betriebscodes bestimmt werden kann und als Antwort darauf ein gewähltes Signal erzeugt werden kann, das zur Auswahl des entsprechenden programmierbaren Logikbereichs dient.

3. Vorrichtung nach Anspruch 1, in der der genannte Dekodier-Multiplexer (40) einen programmierbaren Logikbereich aufweist.

4. Vorrichtung nach allen vorstehenden Ansprüchen, die weiterhin einen N-Wege-Multiplexer (42) umfasst, um von den genannten programmierbaren Logikbereichen (20—24) dekodierte Ausgangssignale (25—29) zu empfangen und dem genannten Steuercodebus (44) Steuercodesignale zu übermitteln.

5. Vorrichtung nach Anspruch 4, in der der genannte N-Wege-Multiplexer (42) aus Feldeffekttransistoren besteht, deren Tore von Leitsignalen (41) gesteuert werden, die der genannte Dekodier-Multiplexer (40) generiert.

## Revendications

1. Dispositif de décodage de codes opération comprenant des moyens (30) permettant de fournir des signaux (31) représentant des codes opération, un bus (44) de codes de commande et ensemble de réseaux logiques programmables (PLA) qui, en réponse auxdits signaux, engendre des codes de commande dérivés desdits signaux, ledit dispositif de décodage étant caractérisé en ce que ledit ensemble de PLA comprend:

une pluralité de PLA (20—24) dont chacun répond auxdits signaux représentant des codes opération, et qui sont mis en oeuvre simultanément de façon à engendrer des signaux de sortie décodes respectifs (25—29); et

un multiplexeur de décodage (40) qui, en réponse également auxdits signaux, sélectionne l'un desdits PLA et transfère leurs signaux de sortie décodés audit bus de codes de commande en tant que signaux représentant des codes de commande.

2. Dispositif selon la revendication 1, caractérisé en ce que chacun des PLA (20—24) décode des codes opération d'une catégorie prédéterminée, et en ce que ledit multiplexeur de décodage (40) comprend des moyens permettant de déterminer la catégorie d'un code opération sélectionné et y répond en engendrant un signal de sélection du PLA correspondant.

3. Dispositif selon la revendication 1, caractérisé en ce que ledit multiplexeur de décodage (40) se compose d'un PLA.

4. Dispositif selon l'une quelconque des revendications précédentes, caractérisé en ce qu'il comprend en outre un multiplexeur à N entrées (42) recevant les signaux de sortie décodés (25—29) desdits PLA (20—24) et fournissant des signaux représentant des codes de commande sur ledit bus (44) de codes de commande.

5. Dispositif selon la revendication 4, caractérisé en ce que ledit multiplexeur à N entrées (42) se compose de transistors à effet de champ dont les portes sont commandées par des signaux de porte (41) fournis par ledit multiplexeur de décodage (40).

FIG. 1

FIG. 2